# EUROPÄISCHE PATENTANMELDUNG

(11) **EP 0 886 233 A2**
(43) Veröffentlichungstag der Anmeldung: **23.12.1998**
(21) Anmeldenummer: 98111269.1
(22) Anmeldetag: 18.06.1998
(51) Int. Cl.: G06K 7/10

(54) **Vorrichtung zur automatischen optischen Erfassung eines Codes auf Gegenständen**

(30) Priorität: 21.06.1997 DE 19726372
(71) Anmelder: Nolte, Markus, 37115 Duderstadt (DE); Messow, Bastian, 37115 Duderstadt (DE)
(72) Erfinder: Nolte, Markus, 37115 Duderstadt (DE); Messow, Bastian, 37115 Duderstadt (DE)
(74) Vertreter: Kuczka, Detlef Dr., Dipl.-Ing.

(57) **Zusammenfassung**

Vorrichtung zur automatischen optischen Erfassung eines warenspezifischen Codes auf Gegenständen mit einer Transporteinrichtung, bei der der Gegenstand über ein Lesegerät (8) geführt wird. Die Transporteinrichtung (4) weist eine Scheibe (5) auf. Die Scheibe (5) überdeckt das Lesegerät (8) und ist für das Lesegerät (8) transparent ausgebildet. Die Scheibe (5) ist um eine zu dem Lesegerät (8) versetzt angeordnete Achse (6) rotierbar.

Eine Warenkasse (1) weist eine derartige Vorrichtung auf.

Mehrere Warenkassen (1) sind als Warenkassenanordnung durchgangsfrei nebeneinander angeordnet und es ist ein gemeinsamer Ausgang vorgesehen. Vor der Warenkassenanordnung ist ein abgegrenzter, die Warenkassenanordnung passierender Weg vorgesehen.

## Beschreibung

Die Erfindung geht aus von einer Vorrichtung zur automatischen optischen Erfassung eines warenspezifischen Codes auf Gegenstände mit einer Transporteinrichtung, bei der der Gegenstand über ein Lesegerät geführt wird.

Eine Vielzahl von Gegenständen weisen einen warenspezifischen Code auf, der auf dem Gegenstand, beispielsweise auf einem Preisschild und / oder Etikett, angeordnet ist. Aber auch der Gegenstand selber bzw. einzelne Merkmale des Gegenstandes können als Code genutzt werden. Mittels des Lesegerätes wird der Code erfaßt und dem Gegenstand zugeordnet. Dadurch wird beispielsweise die Lagerhaltung erheblich vereinfacht. Der Code dient weiterhin dazu, einen Preis des Gegenstandes zu ermitteln. Dafür weisen die heute üblichen Warenkassen das Lesegerät auf, welches mit einem Rechner verbunden ist. Der Rechner stellt die Relation zwischen dem Code und dem Gegenstand her und gibt den Preis aus.

Zur Erfassung des Codes wird der Gegenstand bzw. die Ware von einem Kassierer über das Lesegerät geführt, bzw. das Lesegerät in Form eines Scanners über den Code.

Aus der gattungsbildenden DE - OS 195 33 359 A1 ist eine Warenkasse bekannt, bei der die Erfassung der Ware und deren Preis automatisch ohne Beisein eines Kassierers erfolgt. Die Ware durchläuft mehrere Kontrolleinrichtungen und wird zur Erfassung des Codes und / oder anderer Merkmale von Scannern erfaßt.

Die Druckschrift zeigt weiterhin eine Warenkassenanordnung, bei der einzelne Warenkassen nebeneinander durchgangsfrei angeordnet sind. Für alle Kassen gemeinsam ist ein separat angeordneter Ausgang vorgesehen.

Der Erfindung liegt das Problem zugrunde, die gattungsgemäße Vorrichtung derart weiterzubilden, daß der Scannvorgang vereinfacht wird. Weiterhin soll eine Verwendung der Vorrichtung aufgezeigt werden.

Das Problem betreffend der Vorrichtung wird durch die Merkmale des Anspruches 1 und das der Verwendung durch die Merkmale des Anspruches 10 bzw. 11 gelöst.

Die erfindungsgemäße Vorrichtung weist die Transporteinrichtung auf, der eine Scheibe zugeordnet ist. Die Scheibe ist derart angeordnet, daß sie das Lesegerät überdeckend geführt ist. Das Lesegerät arbeitet beispielsweise mittels Laserstrahlen, aber auch andere Verfahren sind möglich. Das Material der Scheibe ist derart gewählt, daß die Laserstrahlen bzw. die verwendeten Strahlen die Scheibe durchdringen können, also die Scheibe für das Lesegerät transparent ausgebildet ist. Es ist eine Achse vorgesehen, die versetzt zu dem Lesegerät angeordnet und um die die Scheibe rotierbar ist.

Die Scheibe ist vorzugsweise in der Draufsicht kreisförmig ausgebildet.

Auf der Scheibe befindliche Gegenstände führen eine Kreisbewegung aus und werden über einen Kreisabschnitt über das Lesegerät geführt. Ein manuelles Führen des Gegenstandes über das Lesegerät ist nicht mehr erforderlich. Es hat sich weiterhin überraschenderweise herausgestellt, daß die Zuverlässigkeit bei dem Einlesevorgang durch die Kreisbewegung erheblich erhöht wird.

Der Scheibe kann ein Vorlaufband zugeordnet sein, mit dem die Gegenstände auf die Scheibe transportierbar sind. Die zu erfassenden Gegenstände werden auf das Vorlaufband gelegt und von diesem auf die Scheibe transportiert, wo sie dann erfaßt werden.

Es kann ein Scheibenlaufband vorgesehen und derart ausgebildet und angeordnet sein, daß auf der Scheibe transportierte Gegenstände nach Überquerung des Lesegerätes von der Scheibe heruntergeführt werden. Dies ist ein weiterer Schritt in Richtung erleichterter Handhabung.

Das Scheibenlaufband kann senkrecht zu der Scheibe angeordnet sein. Der Gegenstand wird damit von der rotierenden Scheibe an das Scheibenlaufband herangeführt und an dieses angelegt. Entsprechend der Laufrichtung des Scheibenlaufbandes wird der Gegenstand mitgeführt. Dafür kann das Scheibenlaufband Erhebungen, Noppen oder dergleichen aufweisen, um eine sichere Mitnahme zu gewährleisten und einen Schlupf zwischen dem Scheibenlaufband und dem Gegenstand zu vermeiden bzw. zu verringern.

Das Scheibenlaufband und die Scheibe können relativ zueinander verschiebbar ausgebildet sein. Die Verschiebestrecke kann der halben Scheibenlänge bzw. bei runder Ausbildung dem Radius entsprechen. Dadurch ist die Möglichkeit gegeben, die Ablage der Gegenstände zu variieren. Verläuft das Scheibenlaufband durch den Mittelpunkt der Scheibe und ist in einer Position, in der der gesamte Durchmesser der Scheibe überspannt wird, werden die Gegenstände in Laufrichtung abgelegt. Wird das Scheibenlaufband um den Radius der Scheibe in entgegengesetzter Laufrichtung des Laufbandes verschoben, verbleiben die Gegenstände auf der Scheibe und führen einen Kreisbogen mit einem Radius von größer 180° aus, bis sie an der Rückführung des endlosen Scheibenlaufbandes zum Anliegen kommen und somit in die entgegengesetzte Richtung von der Scheibe transportiert werden. Die Ablage der Gegenstände kann somit alternativ gewählt werden.

Die Vorrichtung gemäß den Ansprüchen 1 bis 9 kann erfindungsgemäß in einer Warenkasse Verwendung finden. Aber auch andere Verwendungen sind möglich.

Durch die Möglichkeit, neben der automatischen Erkennung des Codes der Ware die Ablage der Waren von der Scheibe alternativ zu bestimmen, ist die Vorrichtung besonders auch für solche Warenkassen geeignet, die eine Unterscheidung zwischen erfaßter und nicht erfaßter Ware vornehmen, also für Warenkassen, die im wesentlichen ohne Personal auskommen, wie es in der gattungsbildenden Druckschrift beschrieben ist. Gilt eine Ware als nicht erfaßt, beispielsweise weil der Code nicht lesbar und / oder der Code mit erfaßten Kontrollwerten nicht übereinstimmt, verschiebt sich das Scheibenlaufband um die Verschiebestrecke und die Ware wird einem separatem Ablagefach, beispielsweise einer Warenrückgabe, zugeführt. Es ist somit eine einfache und automatische Trennung der Waren ermöglicht. Aber auch aufgrund anderer Kriterien kann die Trennung erfolgen.

Es hat sich als vorteilhaft herausgestellt, wenn das Vorlaufband einen Höhensprung aufweist. Dies dient dazu, Flaschen oder andere Gegenstände mit länglicher Erstreckung, die mit ihrer Querseite auf das Vorlaufband gestellt werden, zu legen.

Es kann eine Steuereinheit vorgesehen sein, die die Waren bzw. Gegenstände als zerquetschungsgefährdet bzw. -ungefährdet bewertet. In Abhängigkeit dieser Bewertung kann dann die weitere Behandlung der Ware erfolgen, beispielsweise die Ablage in verschiedenen Fächern und / oder eine sortierte Ablage.

Die Warenkasse nach Anspruch 10 kann in einer Warenkassenanordnung Verwendung finden. Vor der Warenkassenanordnung ist ein abgegrenzter, die Warenkasenanordnung passierender Weg vorgesehen. Dadurch wird eine platzsparende Aufstellung einer Vielzahl der erfindungsgemäßen Warenkassen ermöglicht. Nach der Beendigung der Registrierung der Waren muß der Käufer, wie es die gattungsbildende Druckschrift aufzeigt, den Wareneingabebereich verlassen, um durch einen überwachten Ausgang zu einer Warenentnahme zu gelangen. Dafür wird vorgeschlagen, einen separaten Weg bereitzustellen. Dieser Weg soll direkt vor der Warenkassenanordnung entlang führen. Ggf. auf eine freie Kasse wartende Kunden werden durch eine Abgrenzung - beispielsweise durch eine entsprechend angesteuerte Schranke, Markierungen etc. - von dem Betreten des Weges abgehalten, so daß dieser für den Durchgang freigehalten ist. Erst nach einer entsprechenden Freigabe bei freier Kasse kann der Weg dann von einem nächsten Kunden überquert werden, um an die entsprechende Kasse zu gelangen.

Die Erfindung wird anhand eines Ausführungsbeispiels weiter erläutert.

Es zeigen, jeweils in schematisierter Darstellung,
- Figur 1: eine Draufsicht auf eine Warenkasse mit einer erfindungsgemäßen Vorrichtung,
- Figur 2: eine Seitenansicht der Vorrichtung und
- Figur 3: eine zweite Draufsicht auf die Warenkasse.

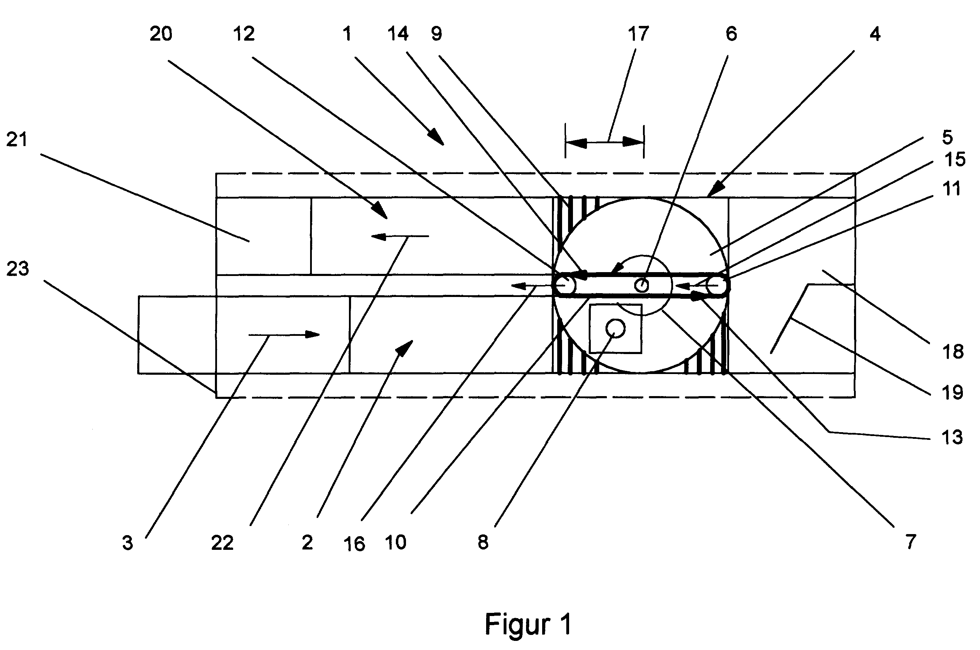

In der Figur 1 ist eine Warenkasse 1 in der Draufsicht dargestellt, die ein dreigeteiltes Vorlaufband 2 aufweist, welches hier nicht dargestellte Gegenstände in Richtung eines Pfeiles 3 zu einer Transporteinrichtung 4 befördert. Die Transporteinrichtung 4 weist im wesentlichen eine in der Draufsicht kreisförmige Scheibe 5 auf, die um eine Achse 6 gemäß einem Pfeil 7 rotierbar ist und ein Lesegerät 8, beispielsweise einen Scanner, überdeckt. Die Scheibe ist für das Lesegerät 8 bzw. dessen Arbeitsstrahlung transparent ausgebildet, so daß ein auf der Ware angeordneter Code erfaßbar ist.

Seitlich der Scheibe 5 sind Rollenbänder 9 vorgesehen.

Senkrecht zu der Scheibe 5 und durch die Achse 6 verlaufend ist ein Scheibenlaufband 10 angeordnet, welches um Transportwalzen 11, 12 geführt und als Endlosband ausgebildet ist. Das Scheibenlaufband 10 wird von den Transportwalzen 11, 12 in Richtung der Pfeile 13, 14 angetrieben.

Die Transportwalzen 11, 12 sind in Richtung von Pfeilen 15, 16 um eine Verschiebestrecke 17 beweglich ausgeführt. Die Verschiebestrecke 17 entspricht im wesentlichen dem Radius der Scheibe 5.

Der Transporteinrichtung 4 schließt sich eine Entnahme 18 an, die hier zweigeteilt nebeneinander ausgebildet ist und eine verstellbare Umlenkklappe 19 aufweist. Die Entnahme 18 kann einteilig oder, wie hier dargestellt, mehrteilig ausgebildet sein, wobei die Anordnung der Einzelentnahmen neben- und / oder übereinander vorgesehen sein können.

Parallel zu dem Vorlaufband 2 und in Verbindung mit der Transporteinrichtung 4 ist ein Rücklaufband 20 angeordnet, welches in einem Rückgabefach 21 mündet. Die Transportrichtung des Rücklaufbandes 20 ist durch einen Pfeil 22 angedeutet.

Eine gestrichelte Linie 23 symbolisiert einen Sichtschutz, der auch transparent ausgebildet sein kann.

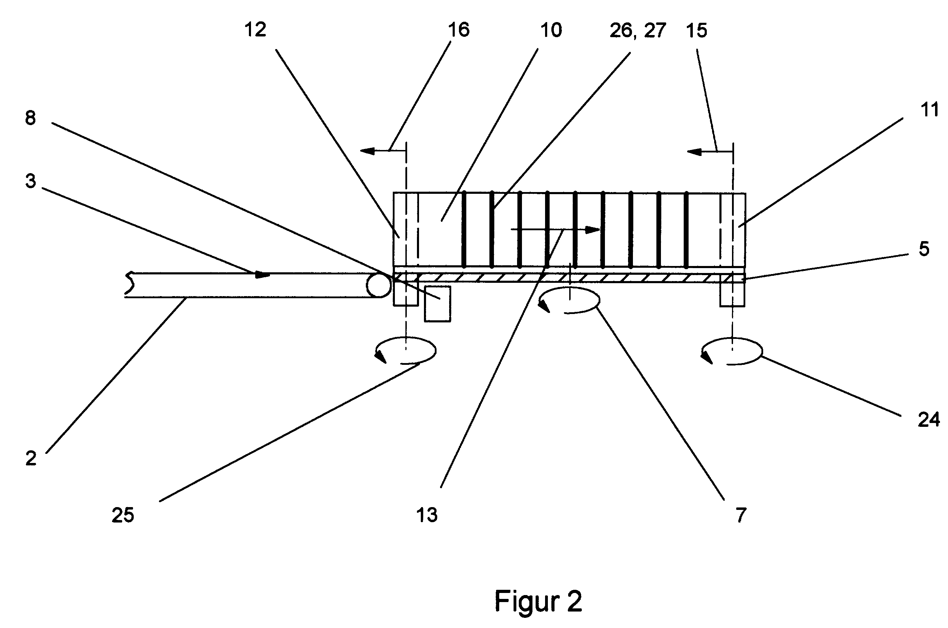

In der Figur 2 ist die Warenkasse 1 in einer vereinfachten Seitenansicht dargestellt. Es ist hier die Anordnung des Scheibenlaufbandes 10 relativ zu der Scheibe 5 sichtbar. Die Transportwalzen 11, 12 rotieren um ihre Achsen, wie es durch die Pfeile 24, 25 dargestellt ist.

Auf dem Scheibenlaufband 10 sind Erhebungen 26 vorgesehen, die hier als Stege 27 ausgebildet sind und senkrecht zu der Laufrichtung gemäß dem Pfeil 13 verlaufen. Aber auch Noppen etc. sind möglich. Der Übersicht halber wurde in der Darstellung nur in einem Teil des Scheibenlaufbandes 10 die Erhebungen 26 eingezeichnet. Es versteht sich, daß das gesamte Scheibenlaufband 10 die Erhebungen 26 aufweist.

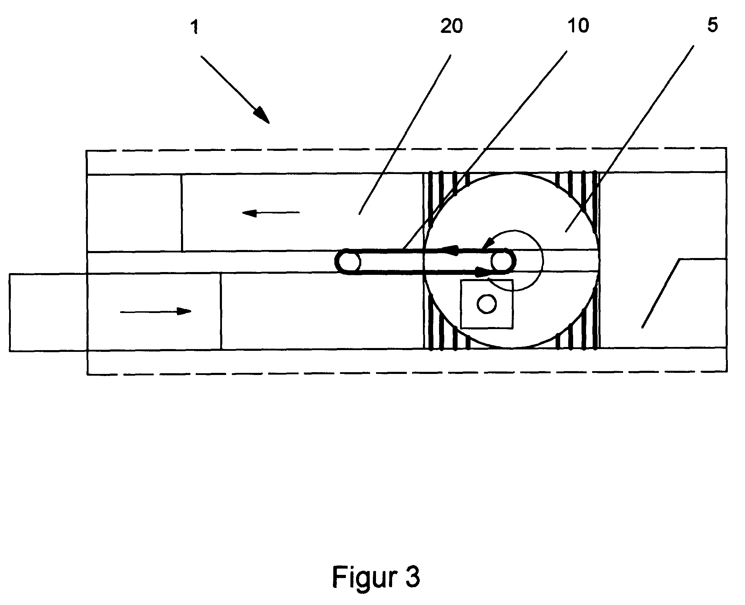

Die Figur 3 zeigt die Warenkasse 1, bei der das Scheibenlaufband 10 um die Verschiebestrecke 17 in Richtung der Pfeile 15, 16 (s. Figur 1) verschoben ist. Es ist erkennbar, daß auf der Scheibe 5 transportierte Gegenstände nun an das rückwärtige Teil des Scheibenlaufbandes 10 zur Anlage kommen und auf das Rücklaufband 20 transportiert werden.

Im folgenden wird die Funktion weiter erläutert. Dabei wird die Transporteinrichtung 4 als Anwendung bei der Warenkasse 1 dargestellt. Es versteht sich, daß auch andere Anwendungen möglich sind.

Die Ware wird von einem Kunden auf das Vorlaufband 2 gelegt und in Richtung des Pfeiles 3 transportiert. Es überwindet einen Höhensprung 28, bei dem beispielsweise Flaschen gekippt werden. Weiterhin werden Kontrolleinrichtungen wie Waage, optische Erkennung etc. passiert. Das Vorlaufband 2 transportiert die Ware zu der Transporteinrichtung 4, namentlich auf die Scheibe 5, die um die Achse 6 rotiert. Die Ware wird damit über das Lesegerät 8 hinweggeführt und ein warenspezifischer Code erfaßt. Stimmen die Werte der Erfassungs- und Kontrolleinrichtungen überein, verbleibt das Scheibenlaufband 10 in der dargestellten Position gemäß der Figur 1 und befördert die Ware in die Entnahme 18.

Stimmen dagegen die Werte nicht überein, verfährt das Scheibenlaufband 10 um die Verschiebestrecke 17 in die Position gemäß der Figur 3. Die Ware wird von der Scheibe 5 an das rückwärtige Teil des Scheibenlaufbandes 10 herangeführt und von dem Scheibenlaufband 10 in Richtung des Pfeiles 14 auf das Rücklaufband 20 befördert. Von diesem gelangt es dann in das Rückgabefach 21.

### Bezugszeichenliste:

- 1: Warenkasse
- 2: Vorlaufband
- 3: Pfeil
- 4: Transporteinrichtung
- 5: Scheibe
- 6: Achse
- 7: Pfeil
- 8: Lesegerät
- 9: Rollenband
- 10: Scheibenlaufband
- 11: Transportwalze
- 12: Transportwalze
- 13: Pfeil
- 14: Pfeil
- 15: Pfeil
- 16: Pfeil
- 17: Verschiebestrecke
- 18: Entnahme
- 19: Umlenkklappe
- 20: Rücklaufband
- 21: Rückgabefach
- 22: Pfeil
- 23: Linie
- 24: Pfeil
- 25: Pfeil
- 26: Erhebung
- 27: Steg
- 28: Höhensprung

## Patentansprüche

1. Vorrichtung zur automatischen optischen Erfassung eines warenspezifischen Codes auf Gegenständen mit einer Transporteinrichtung, bei der der Gegenstand über ein Lesegerät geführt wird, **dadurch gekennzeichnet,** daß die Transporteinrichtung (4) eine Scheibe (5) aufweist, daß die Scheibe (5) das Lesegerät (8) überdeckt und für das Lesegerät (8) transparent ausgebildet ist, und daß die Scheibe (5) um eine zu dem Lesegerät (8) versetzt angeordnete Achse (6) rotierbar ist.

2. Vorrichtung nach Anspruch 1, **dadurch gekennzeichnet,** daß die Scheibe (5) in der Draufsicht kreisförmig ausgebildet ist.

3. Vorrichtung nach Anspruch 1 oder 2**, dadurch gekennzeichnet,** daß der Scheibe (5) ein Vorlaufband (2) zugeordnet ist, mit dem die Gegenstände auf die Scheibe (5) transportierbar sind.

4. Vorrichtung nach einem oder mehreren der Ansprüchen 1 bis 3, **dadurch gekennzeichnet,** daß ein Scheibenlaufband (10) vorgesehen und derart ausgebildet und angeordnet ist, daß auf der Scheibe (5) transportierte Gegenstände nach Überquerung des Lesegerätes (8) von der Scheibe (5) heruntergeführt werden.

5. Vorrichtung nach Anspruch 4, **dadurch gekennzeichnet,** daß das Scheibenlaufband (10) senkrecht zu der Scheibe (5) angeordnet ist.

6. Vorrichtung nach Anspruch 4 oder 5, **dadurch gekennzeichnet,** daß das Scheibenlaufband (10) und die Scheibe (5) relativ zueinander verschiebbar ausgebildet sind.

7. Vorrichtung nach Anspruch 6, **dadurch gekennzeichnet,** daß die Verschiebestrecke (17) der halben Scheibenlänge entspricht.

8. Vorrichtung nach einem oder mehreren der Ansprüche 3 bis 7, **dadurch gekennzeichnet,** daß das Vorlaufband (2) einen Höhensprung (28) aufweist.

9. Vorrichtung nach einem oder mehreren der Ansprüche 1 bis 8, **dadurch gekennzeichnet,** daß eine Steuereinheit vorgesehen ist, die die Gegenstände als zerquetschungsgefährdet und - ungefährdet bewertet.

10. Verwendung einer Vorrichtung gemäß einem oder mehreren der Ansprüche 1 bis 7, **dadurch** **gekennzeichnet,** daß die Vorrichtung mit einer Warenkasse zusammenarbeitet.

11. Verwendung einer Warenkasse nach Anspruch 10 zu einer Warenkassenanordnung mit mehreren Warenkassen, bei der die einzelnen Warenkassen durchgangsfrei nebeneinander angeordnet sind und ein gemeinsamer Ausgang vorgesehen ist, **dadurch gekennzeichnet,** daß vor der Warenkassenanordnung ein abgegrenzter, die Warenkassenanordnung passierender Weg vorgesehen ist.
